# EUROPÄISCHE PATENTANMELDUNG

(11) **EP 2 111 734 A1**
(43) Veröffentlichungstag der Anmeldung: **28.10.2009**
(21) Anmeldenummer: 09005567.4
(22) Anmeldetag: 21.04.2009
(51) Int. Cl.: A01B 33/08

(54) **Kreiselegge**

(30) Priorität: 25.04.2008 DE 102008020849
(71) Anmelder: Amazonen-Werke H. Dreyer GmbH & Co. KG, 49205 Hasbergen (DE)
(72) Erfinder: Gieseke, Reinhard, 27798 Hude (DE)

(57) **Zusammenfassung**

Kreiselegge mit einer als Kastenbalken ausgebildeten Getriebewanne mit mehreren Stirnrädern, die drehfest mit im Boden der Getriebewanne gelagerten Rotorwellen verbunden sind, wobei die Stirnräder nebeneinander angeordnet sind und miteinander im Eingriff stehen, sowie über ein oberhalb der Getriebewanne angeordnetes Hauptgetriebe mit einer Antriebsverbindung gegensinnig rotierend antreibbar sind, wobei die Stirnräder durch zumindest einer Öffnung in dem Kastenbalken in die Getriebe einsetzbar und durch Öffnungen in dem Deckel auf die Rotorwellen aufsetzbar sind, wobei der Deckel als einteiliger Bestandteil des Kastenbalkens ausgestaltet ist. Um eine Kreiselegge mit einem in sich geschlossenen Kastenbalkenprofil eine einfache Einbringung der Stirnräder unter Beibehaltung der geschlossenen Kastenbalkenprofile vorzuschlagen, ist vorgesehen, dass in dem Deckel zumindest eine Öffnung mit größerem Durchmesser als der äußerste Durchmesser der im Kastenbalken auf den Rotorwellen angeordneten Stirnrädern angeordnet ist, so dass die Stirnräder durch diese Öffnung in die Getriebewanne einbringbar sind.

## Beschreibung

Die Erfindung betrifft eine Kreiselegge gemäß des Patentanspruches 1.

Eine derartige Kreiselegge ist beispielsweise durch die EP 1 754 404 A1 bekannt. Diese Kreiselegge weist einen sich quer zur Fahrtrichtung erstreckenden langgestreckten Kastenbalken auf, der auf seiner Oberseite durch plattenförmige Deckelelemente verschließbare Öffnungen aufweist. In dem Boden des als Getriebewanne ausgebildeten Kastenbalken sind Lagerhülsen eingeschweißt. In den Lagerhülsen sind die sich bis in die Getriebewanne erstreckenden Kreiselwellen gelagert. Auf den in die Getriebewanne hineinragenden Wellenenden der Kreiselwellen sind Profile angeordnet, über welche die auf die Kreiselwellen aufsetzbaren Stirnräder mit den Wellen formschlüssig verbindbar sind. Die Stirnräder werden von oben durch die Öffnung des Kastenbalkens auf die Wellenenden aufgesetzt und mittels geeigneter Sicherungsmittel auf den Wellen gesichert. Durch das offene Profil der kastenförmigen Getriebewanne, die durch die plattenförmigen Elemente verschlossen wird, um den Kastenbalken zu bilden, ist die Ausgestaltung des als Rahmen ausgebildeten Kastenbalkens relativ aufwendig. Außerdem ist das Kastenbalkenprofil in sich relativ wenig verbindungssteif, so dass dieses Wannenprofil durch eine auf der Unterseite als an die Getriebewanne angesetzte sich quer zur Fahrtrichtung und Längsrichtung des Kastenbalkens erstreckende angeschweißte Profilschiene verstärkt werden muss.

Es sind weitere als Kastenbalken ausgebildete Getriebewannen bekannt, die als geschlossenes Kastenprofil ausgebildet sind. Bei diesen Kreiseleggen weisen die Kastenbalken seitlich zumindest auf der einen Seite eine Öffnung auf, durch welche die Stirnräder seitlich nacheinander in die Getriebewanne eingeschoben werden können. Anschließend werden von unten die Kreiselwellen in die in den Kastenbalken angeordneten Lager eingeschoben und durch die Mittelbohrung des Stirnrades nach oben geschoben und durch in der Oberwand des Kastenbalkens angeordneten Öffnung auf den Kreiselwellen mit Sicherungsmittel gesichert. Diese Ausgestaltung ist von der Montage her sehr aufwendig. Insbesondere für den Reparaturfall, falls ein Stirnrad ausgetauscht werden muss, müssen alle Stirnräder, die sich zwischen dem defekten Stirnrad und der Öffnung in der Seitenwand des Kastenbalkens befinden, herausgenommen und anschließend wieder hineingeschoben werden.

Der Erfindung liegt die Aufgabe zugrunde, für eine Kreiselegge mit einem in sich geschlossenen Kastenbalkenprofil eine einfache Einbringung der Stirnräder unter Beibehaltung des geschlossenen Kastenbalkenprofils vorzuschlagen.

Diese Aufgabe wird erfindungsgemäß dadurch gelöst, dass in dem Deckel zumindest eine Öffnung mit größerem Durchmesser als der äußerste Durchmesser der im Kastenbalken auf den Rotorwellen angeordneten Stirnrädern angeordnet ist, so dass die Stirnräder durch diese Öffnung in die Getriebewanne einbringbar sind. Infolge dieser Maßnahme können bei einem an sich sonst geschlossenen als Kastenbalken ausgebildeten Getriebewanne die Stirnräder in den Kastenbalken eingebracht und zu Reparaturzwecken in einfacher Weise entnommen werden. Diese Öffnung ist jedoch nicht wesentlich größer als der größte Durchmesser des Stirnrades.

Hierbei ist vorteilhaft, dass der Abstand zwischen dem oberen Ende der in den Lagerungen auf der Unterseite des Kastenbalkens gelagerten Kreiselwelle mindestens einem Abstand zu der Unterkante der Oberwand des Kastenbalkens aufweisen, der zumindest das absolute Höhenmaß des Stirnrades aufweist. Hierdurch ist es möglich, die Stirnräder in einem geschlossenen Kastenbalken, der die Getriebewanne bildet, auf sich bereits in ihrer endgültigen Lage in ihren Lagerungen sich befindlichen Kreiselwellen zu montieren und auch wieder zu demontieren. Somit kann in einfacher Weise ein Zahnrad erforderlichenfalls ausgetauscht werden, ohne dass weitere Zahnräder demontiert und anschließend wieder montiert werden müssen. Es ergibt sich also der gleiche Montage- und Demontage-Vorteil durch diese erfindungsgemäß Maßnahme wie bei einem offenen Kastenprofil mit großen oberen Öffnungen, die durch plattenförmige Deckelelemente verschlossen werden.

Eine Vereinfachung der Einbringung der Stirnräder bei montiertem Hauptgetriebe wird dadurch erreicht, dass in jeder Seitenhälfte des Kastenbalkens in dessen Deckel zumindest eine Öffnung mit einem größeren Durchmesser als der äußerste Durchmesser der im Kastenbalken angeordneten Stirnräder angeordnet ist. Wie bereits erwähnt braucht diese Öffnung jedoch nicht wesentlich größer als der größte Durchmesser des Stirnrades sein.

Um das jeweilige Stirnrad in einfacher Weise auf der Kreiselwelle befestigen zu können, ist vorgesehen, dass in dem Deckel fluchtend zu jeder Kreiselwelle eine Öffnung zur Sicherung des Stirnrades auf der dazugehörigen Kreiselwelle angeordnet ist. Durch diese Öffnung können entsprechende Montagemittel zur Befestigung der Sicherungsmittel geschoben werden.

Eine einfache Schaffung einer Getriebewanne mit seitlich verschlossenen Seitenwänden wird dadurch erreicht, dass die Getriebewanne des Kastenbalkens jeweils an ihren Seitenenden mit einer Seitenwand, die als einteiliger Bestandteil des Kastenbalkens ausgebildet ist, verschlossen ist.

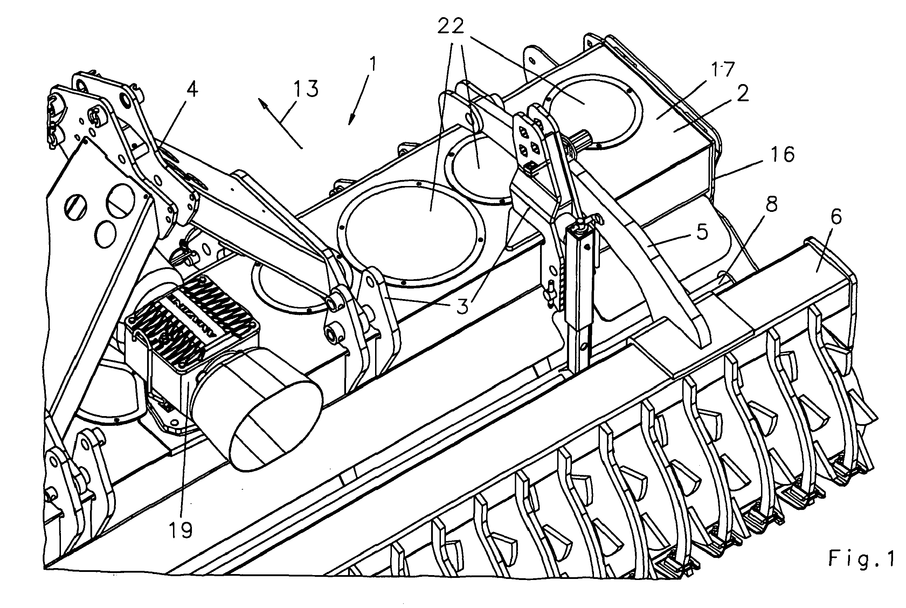

Weitere Einzelheiten der Erfindung sind der Beispielsbeschreibung und den Zeichnungen zu entnehmen.
Hierbei zeigen
- Fig. 1: die als Kreiselegge ausgebildete Bodenbearbeitungsmaschine mit nachgeordneter Nachlaufwalze in perspektivischer Darstellung von hinten und in Teilansicht,
- Fig. 2: die Kreiselegge mit nicht dargestellter Seitenplatte beim Montagevorgang der Stirnräder in perspektivischer Darstellung seitlich von vorne und in Teilansicht,
- Fig. 3: die Kreiselegge beim Montagevorgang der Stirnräder in perspektivischer Darstellung in der Ansicht von schräg vorne oben in Teilansicht und
- Fig. 4: die Kreiselegge beim Montagevorgang der Stirnräder in perspektivischer Darstellung in der Ansicht von vorne und in Teilansicht.

Die als Kreiselegge 1 ausgebildete Bodenbearbeitungsmaschine weist einen als Kastenbalken 2 ausgebildeten Rahmen auf. An dem Kastenbalken 2 sind Halterungen 3 für die Anordnung des Dreipunktanbauturmes 4 und für Tragarme 5 einer Nachlaufwalze 6, sowie einer zwischen den Bodenbearbeitungswerkzeugen 7 der Kreiselegge 1 und der Nachlaufwalze 6 angeordneten Prallschiene 8 angeordnet.

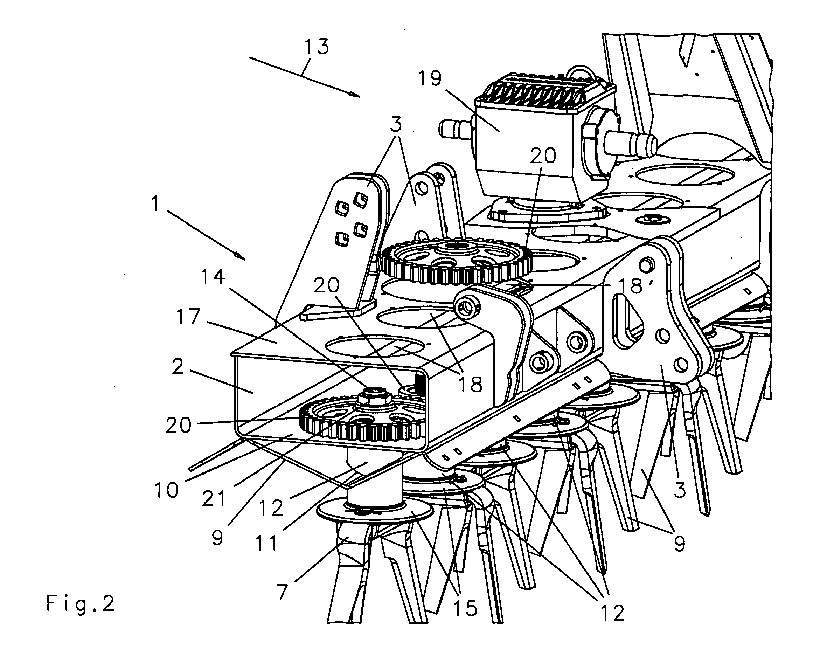

Der Kastenbalken 2 ist gleichzeitig als Getriebewanne ausgebildet. Der Kastenbalken 2 ist als in sich geschlossener Profilträger ausgebildet, wie insbesondere die Fig. 2 zeigt. Auf der Unterseite des Kastenbalkens 2 ist ein V-förmiger Verstärkungsträger 9 angeordnet. In dem Boden 10 des Kastenbalkens 2 und in dem Verstärkungsträger 9 sind Ausspaarungen 11 angeordnet. In diesen Ausspaarungen 11 sind Lagerhülsen 12 angeordnet, die mit dem Boden 10 des Kastenbalkens 2 und des Profilträgers 9 verschweißt sind. In den Lagerhülsen 12, die beabstandet zueinander in dem sich quer zur Fahrtrichtung 13 erstreckenden Kastenbalken 2 angeordnet sind, sind die Kreiselwellen 14 der Werkzeugträger 15, die die als Zinken 7 ausgebildeten Bodenbearbeitungswerkzeuge tragen, drehbar gelagert.

Der Kastenbalken 2 bildet die Getriebewanne. Die Getriebewanne bzw. der Kastenbalken 2 ist seitlich mit den an dem Kastenbalken 2 angeordneten Seitenplatten 16 die mit dem Kastenbalken 2 verschweißt sind, verschlossen.

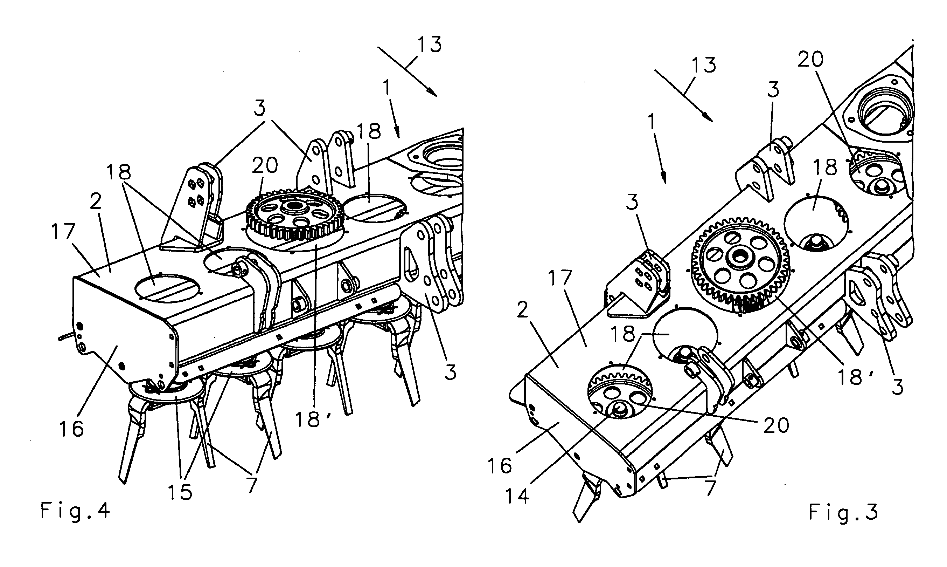

In dem Deckel 17 der Getriebewanne 2 sind fluchtend mit den Lagerhülsen 15 bzw. den in den Lagerhülsen 15 angeordneten Kreiselwellen 14 die Öffnungen 18 angeordnet. Auf jeder Seite des Kastenbalkens 2 bzw. der Getriebewanne ist seitlich des im mittleren Bereich der Getriebewanne 2 angeordneten Hauptgetriebes 19, jeweils eine größere Öffnung 18' angeordnet. Diese Öffnung 18' mit dem größeren Durchmesser weist einen derartigen Durchmesser auf, der größer ist als der äußerste Durchmesser der im Kastenbalken 2 auf die Kreiselwellen 14 aufgesetzten Stirnrädern 20, wie dies die Fig. 2 und Fig. 3 zeigen.

Die auf die Kreiselwellen 14 aufgesetzten Stirnräder 20 benachbarter Werkzeugkreisel 15 kämmen miteinander, so dass die einander benachbarten Werkzeugkreisel 15, die in der Getriebewanne des Kastenbalkens 2 gelagert sind, gegensinnig zueinander rotierend angetrieben werden können.

Über das im mittleren Bereich auf den Kastenbalken 2 befestigte Zentralgetriebe 19, welches eine nach unten ragende und ein Ritzel tragende Ritzelwelle aufweist, wird eines der Stirnräder 20 angetrieben, so dass die Stirnräder 20 und die Werkzeugkreisel 15 entsprechend gegensinnig rotierend antreibbar sind.

Der Montagevorgang der Stirnräder 20 auf die in der Getriebewanne des Kastenbalkens 2 hineinragenden oberen Enden der Kreiselwellen 14 erfolgt in folgender Weise:

Nach dem durch einen Montagevorgang die Kreiselwellen 14 der Werkzeugkreisel 15 in den Lagerhülsen 12 drehbar angeordnet sind, wird durch die größere Öffnung 18' jeweils Stirnrad 20 für Stirnrad 20, wie Fig. 2 - 3 zeigt, in die Getriebewanne 2 eingebracht und von Hand soweit innerhalb der Getriebewanne 2 nach dem Einbringen durch die übrigen Öffnungen 18 weitergereicht, bis sich jeweils ein Stirnrad 20 nach einem entsprechenden Montage- und Aufsetzvorgang auf einer der in den Lagerhülsen 12 gelagerten Kreiselwelle 14 aufgesetzt ist.

Nach dem Aufsetzen der Stirnräder 20 auf den Kreiselwellen 14, wobei die Kreiselwellen 14 mit den jeweiligen Stirnrad 20 in bekannter Weise über eine formschlüssige Verbindung miteinander verbunden sind, werden sie durch die jeweils sich oberhalb der Kreiselwellen 14 befindlichen Öffnung 18, 18', die sich in dem Deckel 17 der Getriebewanne befinden, ein Sicherungselement 21, beispielsweise eine Sicherungsschraube, auf das obere Ende der Kreiselwelle 14 aufgeschraubt, damit das Stirnrad 20 entsprechend auf der zugehörigen Kreiselwelle 14 gesichert ist. Durch die in dem Deckel 17 der Getriebewanne 2 angeordneten Öffnungen 18, 18' oberhalb jeder Kreiselwelle 14 kann mit einer entsprechenden Handhabevorrichtung das Sicherungsmittel 21 auf das obere Ende der Kreiselwelle 14 angeordnet werden.

Wie vorbeschrieben sind durch die zumindest eine Öffnung 18' mit größerem Durchmesser als der äußerste Durchmesser der im Kastenbalken 2 auf den Kreiselwellen 14 angeordneten Stirnräder 20, die Stirnräder 20 durch diese Öffnung 18' in die Getriebewanne 2 einzubringen.

Wie leicht einsehbar ist, kann in entsprechend rückwärtiger Montageweise, ohne alle Stirnräder 20 demontieren zu müssen, das entsprechende defekte Stirnrad demontiert und ein neues Stirnrad eingesetzt werden.

Die Öffnungen 18 und 18' in dem Deckel 17 der Getriebewanne 2 werden durch entsprechende Platten 22 verschlossen.

## Patentansprüche

1. Kreiselegge mit einer als Kastenbalken ausgebildeten Getriebewanne mit mehreren Stirnrädern, die drehfest mit im Boden der Getriebewanne gelagerten Kreiselwellen verbunden sind, wobei die Stirnräder nebeneinander angeordnet sind und miteinander im Eingriff stehen, sowie über ein oberhalb der Getriebewanne angeordnetes Hauptgetriebe mit einer Antriebsverbindung gegensinnig rotierend antreibbar sind, wobei die Stirnräder durch zumindest einer Öffnung in dem Kastenbalken in die Getriebe einsetzbar und durch Öffnungen in dem Deckel auf die Kreiselwellen aufsetzbar sind, wobei der Deckel als einteiliger Bestandteil des Kastenbalkens ausgestaltet ist, **dadurch gekennzeichnet, dass** in dem Deckel (17) zumindest eine Öffnung (18') mit größerem Durchmesser als der äußerste Durchmesser der im Kastenbalken (2) auf den Kreiselwellen (14) angeordneten Stirnrädern (20) angeordnet ist, so dass die Stirnräder (20) durch diese Öffnung (18) in die Getriebewanne (2) einbringbar sind.

2. Kreiselegge nach Anspruch 1, **dadurch gekennzeichnet, dass** in jeder Seitenhälfte des Kastenbalkens (2) in dessen Deckel (17) zumindest eine Öffnung (18') mit einem größeren Durchmesser als der äußerste Durchmesser der im Kastenbalken (2) angeordneten Stirnräder (20) angeordnet ist.

3. Kreiselegge nach Anspruch 1, **dadurch gekennzeichnet, dass** in dem Deckel fluchtend zu jeder Kreiselwelle (14) eine Öffnung (18, 18') zur Sicherung des Stirnrades (20) auf der dazugehörigen Kreiselwelle (14) angeordnet ist.

4. Kreiselegge nach Anspruch 1, **dadurch gekennzeichnet, dass** die Getriebewanne des Kastenbalkens (2) jeweils an ihren Seitenenden mit einer Seitenwand (16), die als einteiliger Bestandteil des Kastenbalkens (2) ausgebildet ist, verschlossen ist.
